# EUROPÄISCHE PATENTSCHRIFT

(11) **EP 0 348 804 B1**
(45) Veröffentlichungstag und Bekanntmachung des Hinweises auf die Patenterteilung: **19.05.1993**
(21) Anmeldenummer: 89111257.5
(22) Anmeldetag: 21.06.1989
(51) Int. Cl.: C22C 32/00

(54) **Verschleissfestes Bauteil und Verfahren zu seiner Herstellung**
Wear-resistant component and process for preparing it
Elément de construction résistant à l'usure et procédé de fabrication

(30) Priorität: 27.06.1988 US 211732
(43) Veröffentlichungstag der Anmeldung: 03.01.1990
(73) Patentinhaber: DEERE & COMPANY, Moline, Illinois 61265 (US)
(72) Erfinder: Revankar, Gopal Subray, Moline, IL 61265 (US)
(74) Vertreter: Feldmann, Bernhard

(56) Entgegenhaltungen:
- CA-A- 1 236 709
- US-A- 4 032 302
- CHEMICAL ABSTRACTS, Band 75, Nr. 24, 13 Dezember 1971, Seiten 99-100, Zusammenfassung Nr. 142503p, Columbus, Ohio, US; M.R.CHASMAN: "Solid lubrication for aero propulsion systems"

## Beschreibung

Die Erfindung betrifft ein verschleißfestes Bauteil, insbesondere eine Dichtleiste für eine Rotationskolbenverbrennungskraftmaschine, und ein Verfahren zu deren Herstellung.

Dichtleisten für Rotationskolbenmaschinen, die auch Apex-Dichtungen genannt werden, sind wegen der hohen Betriebsdrücke und -temperaturen, den hohen Relativgeschwindigkeiten zwischen Dichtung und der umlaufenden Oberfläche und Schwierigkeiten oder Unzulänglichkeiten bei der Schmierung der Kontaktfläche hohem Verschleiß ausgesetzt. Diese Bedingungen sind sogar noch schärfer bei einer Rotationskolbenmaschine mit Aufladung durch einen Schichtverdichter. Es wurden verschiedene Dichtleistenmaterialien für eine Rotationskolbenmaschine vorgeschlagen. Beispielsweise wurden Dichtleisten für Rotationskolbenmaschinen aus gesintertem "Clevite 300", einem bekannten Dichtungsmaterial, hergestellt, wie aus der US-PS 4,144,003 hervorgeht. Es wurde jedoch festgestellt, daß diese üblichen "Clevite"-Dichtungen unannehmbare Verschleißraten insbesondere unter den Bedingungen einer Rotationskolbenmaschine mit Aufladung aufweisen.

In der US-PS 4,011,054 ist eine Dichtung oder ein Verschleißstreifen beschrieben, der ein gesintertes Material enthält, welches auf einer Mischung von Eisenpulver, Vanadiumkarbidpulver und anderen Karbiden basiert. Es wird angegeben, daß abgerundete Vanadiumkarbidteilchen in einer Matrix aus anderem Material ausgebildet sind. Aus verschiedenen Gründen wurde dieses Material nicht in signifikanten Mengen kommerziell angewendet. Einer der Gründe ist darin zu sehen, daß Vanadiumkarbidpulver so teuer ist, daß Dichtungen, bei denen Vanadiumkarbid verwendet wird, gewerblich nicht brauchbar erscheinen. Ferner weist Vanadiumkarbid eine Härte auf, die zu hoch und zu schwankend ist, mit der Folge, daß das in den Dichtungsstreifen enthaltene Vanadiumkarbid schwerwiegenden Verschleiß in solchen Oberfläche verursacht, gegen die die Dichtungen gleiten. Aus diesem Grunde ist eine gewerblich geeignete verschleißfeste Dichtleiste begehrt.

Die der Erfindung zugrunde liegende Aufgabe wird darin gesehen, ein verschleißfestes Material insbesondere für eine Dichtleiste anzugeben, die den Anforderungen einer Rotationskolbenmaschine mit Aufladung genügt. Ferner soll ein Verfahren zur Herstellung solcher verschleißfesten Bauteile angegeben werden.

Die Aufgabe wird erfindungsgemäß dadurch gelöst, daß das Bauteil aus einer Mischung aus Pulvermaterial, welches als Clevite 300 bekannt ist, und einer Mischung aus Wolframkarbidpulver und Kobaltpulver besteht. Insbesondere enthält das Bauteil als Ausgangsstoffe etwa, in Gewichtsanteilen, 49% pulverisiertes Eisen, 26,4% Wolframkarbid, 14,1% Kobalt und 10,5% Molybdän, die miteinander vermischt werden. Die Mischung wird in einer Preßform kalt gepreßt, so daß sie etwa die Größe und Form einer Dichtleiste einnimmt, und dann vakuumgesintert. Hierdurch entsteht eine Dichtleiste, welche harte, abgerundete, nicht scharfkantige Karbidteilchen enthält, die in einer weicheren Matrix eingebettet sind. Nach dem Sintern kann das Bauteil wahlweise heiß isostatisch gepreßt werden. Hierdurch wird eine zwischenraumfreie Matrix erzeugt und die Materialdichte erhöht.

Die erfindungsgemäßen Bauteile weisen eine hohe Verschleißfestigkeit, insbesondere Abriebsfestigkeit, auf, ohne jedoch Oberflächen, gegen die sie gleiten, zu verschleißen. Daraus folgt, daß das Material der vorliegenden Erfindung überall dort Anwendung finden kann, wo die Teile einem erhöhten Abriebverschleiß ausgesetzt sind. Dies ist insbesondere bei Dichtleisten von Rotationskolbenmaschinen der Fall.

Weitere vorteilhafte Ausgestaltungen und Weiterbildungen der Erfindung gehen aus den abghängigen Patentansprüchen hervor.

Anhand der Zeichnung, die Ausführungsbeispiele der Erfindung zeigt, sollen die Erfindung sowie weitere vorteilhafte Ausgestaltungen und Weiterbildungen der Erfindung näher beschrieben und erläutert werden.

Es zeigt:
- Fig. 1: die Mikrophotographie der Struktur eines erfindungsgemäßen Dichtungsmaterials, das bei 1200 Grad Celsius gesintert wurde, in 200-facher Vergrößerung,
- Fig. 2: die Mikrophotographie der Struktur eines Dichtungsmaterials gemäß Fig. 1, das jedoch bei 1250 Grad Celsius gesintert wurde, in 200-facher Vergrößerung,
- Fig. 3a: die Mikrophotographie eines erfindungsgemäßen Dichtungsmaterials in 1000-facher Vergrößerung, bevor die Dichtung einem Verschleißtest unterzogen wurde,
- Fig. 3b: die Mikrophotographie der selben Dichtungsmaterialfläche wie in Fig. 3a in 1000-facher Vergrößerung, jedoch nachdem die Dichtung Gegenstand eines Verschleißtestes war,
- Fig. 4a: die graphische Darstellung der Dichtungstemperatur (in Grad Celsius) über der Zeit (in Sekunden) während des Verschleißtestes gemäß Fig. 3b und
- Fig. 4b: die graphische Darstellung des während des Verschleißtestes gemäß Fig. 3b und 4a gemessenen Reibungskoeffizienten über der Zeit.

Gemäß vorliegender Erfindung wird pulverisiertes Dichtungsmaterial aus Clevite 300 mit einem Pulvergemisch aus Wolframkarbid (WC) und Kobalt (Co) gemischt. Clevite 300 ist ein bekannter Stoff, den die Clevite Corporation patentieren lassen hat und der aus etwa 70 Gewichts-% Eisen (Fe), 15 Gewichts-% Molybdän (Mo) und 15 Gewichts-% Kobalt (Co) besteht und in der US-PS 3,052,954, näher beschrieben ist.

Die WC/Co-Mischung ist als Amdry 927, welches von Alloy Metals Inc. hergestellt wird, oder als 72F-NS, welches von Metco Inc. hergestellt wird, bekannt. Sie besteht aus etwa 88 Gewichts-% Wolframkarbid und 12 Gewichts-% Kobalt. Diese beiden Mischungen werden vorzugsweise vereinigt und mit einem Mischungsverhältnis von 70 Gewichts-% Clevite zu 30 Gewichts-% WC/Co gemischt. Die sich ergebende Mischung besteht dann aus etwa 49 % Eisen, 26,4 % Wolframkarbid, 14,1 % Kobalt und 10,5 96 Molybdän.

Die sich ergebende Mischung wird dann in einer Gesenkpresse bei etwa 62 bis 70 kN/cm² (Umrechnung aus 40 - 45 tons per square inch) kalt in eine Preßform gepreßt, um die übliche Form einer Dichtleiste herzustellen. Das Dichtmaterial wird dann etwa 3 Stunden lang bei 1,33 x 10⁻² bis 1,33 x 10⁻³ N/m² (1,33 x 10⁻⁴ bis 1,33 x 10⁻⁵ mbar gemäß Umrechnung aus 10⁻⁴ to 10⁻⁵ Torr) Luftdruck oder 6900 bis 13800 N/m² (69 bis 138 mbar gemäß Umrechnung aus 1 to 2 p.s.i.) Argondruck und einer Temperatur von 1200 bis 1225 Grad Celsius vakuumgesintert.

In einem wahlweisen Verfahrensschritt kann dann die Dichtung bei 1100 Grad Celsius ungefähr eine Stunde unter einem Argondruck von etwa 10⁸ N/m² (1000 bar), beispielsweise 1,034 x 10⁸ N/m² (1034 bar gemäß Umrechnung aus 15000 p.s.i.) heiß isostatisch gepreßt werden.

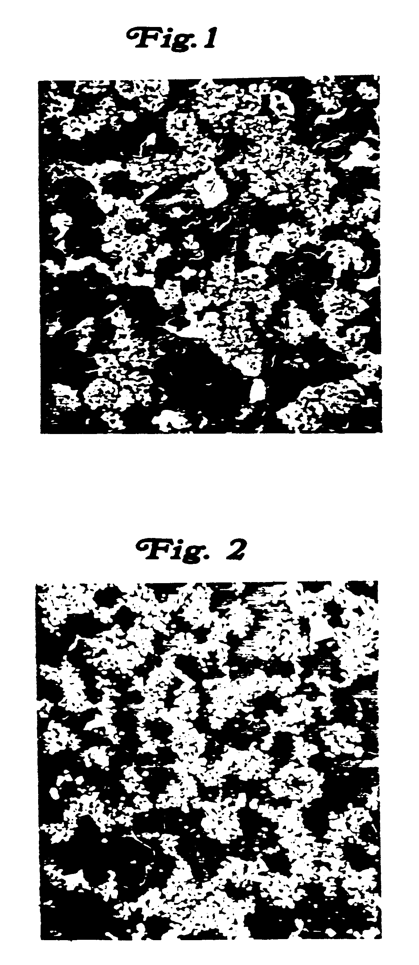

Fig. 1 zeigt die Mikrostruktur eines Dichtungsmaterials, welches bei 1200 Grad Celsius gesintert wurde, was zu abgerundet abgeschiedenen Karbidteilchen führte. Bei Sintertemperaturen, die größer sind als ca. 1225 Grad Celsius, entstehen scharfkantige Karbidteilchen. Bei einer 30 Gewichts-%-igen Clevite-Mischung, die bei 1200 Grad Celsius oder mehr gesintert wird, scheint die Clevite-Phase eine eutektische Flüssigkeit mit tieferem Schmelzpunkt an der Berührungsfläche mit den Karbidteilchen zu bilden. Bei Temperaturen im Bereich zwischen 1200 und 1225 Grad Celsius scheinen die sich neuerlich bildenden Karbide den ursprünglichen WC-Teilchen zu entsprechen, ausgenommen, daß ihre ZusammenSetzung und Form sich infolge der Feststoff-Flüssigkeits-Oberflächendiffusion der Clevite-Matrixelemente (vor allem Fe, Mo und kleine Anteile von Co) geändert haben. (Es gibt Anzeichen dafür, daß Wolfram aus der Karbidphase in die Matrix diffundiert.) Es wird angenommen, daß das Kobalt die Gleiteigenschaften bei hohen Temperaturen verbessert.

Die neu gebildeten Teilchen tendieren dazu, entsprechend der Oberflächenspannung der Grenzflüssigkeit, eine Kugelform anzunehmen. Ist jedoch die Temperatur beim Sintern höher als 1200 Grad Celsius, kann das Ausmaß der Flüssigkeitsphase größer sein, so daß ursprüngliche WC-Teilchen vollständig in der Flüssigkeit gelöst werden und beim Abkühlen als scharfkantig zusammengesetzte Karbidkristalle ausfallen. Es wurde herausgefunden, daß für 30 %-iges WC eine Sintertemperatur von 1250 Grad Celsius einen Grenzwert darstellt, bei der die entstehende Mikrostruktur eine Mischung sowohl aus abgerundeten als auch aus scharfkantigen Ausscheidungen enthält (siehe Fig. 2).

Es wird angenommen, daß die Ausbildung neuer Karbide während der ersten 60 Minuten stattfindet. Die Sinterzeit wurde über 60 Minuten hinaus ausgedehnt, um eine bessere Sinterung der Matrix zu erhalten. Die Temperatur von 1200 Grad Celsius scheint tiefer zu sein als erforderlich, um eine völlig zwischenraumfreie Clevite-Matrix herzustellen, da das Sintermaterial eine beträchtliche Porösität aufweist. Daher sollte die Dichtung heiß isostatisch gepreßt werden. Es wird angenommen, daß dieser heiß isostatische Preßzyklus nicht die Form oder Verteilung der Karbide verändert, jedoch zu einer verbesserten Dichte (9,4 g/cm³) führt. Die Dichte der Proben, die nicht einem heiß isostatischen Preßverfahren unterzogen wurden, betrug 7,7 g/cm³, was im Vergleich zu den einem heiß isostatischen Preßverfahren unterzogenen Proben auf einen Porösitätsbetrag von 18,1 % hinweist.

Dichtleisten, die entsprechend der vorliegenden Erfindung ausgebildet wurden, wurden in dem nicht heiß isostatisch gepreßten Zustand auf einem Meßplatz getestet, bei dem die Dichtleiste gegen die innere Oberfläche eines rotierenden Zylinders oder Ringes mit einem Durchmesser von 24,13 cm (Umrechnung aus 9,5 inch) lief. Die innere Oberfläche des Zylinders war mit üblichem "D-Gun" LW-15 Wolframkarbid, welches von Union Carbide geliefert wird, beschichtet und mit Stauffer's SDL-1 Schmiermittel geschmiert. Die Zylinderdrehzahl, die Testdauer und die radial nach außen gerichtete Belastung der Dichtung wurde wie folgt variiert:

| Versuch Nr. | Ringdrehzahl (U/min) | Belastung (kg/cm) | Dauer (min) |
|---|---|---|---|
| 222 | 1000 | 4,0 | 120 |
| 223 | 1350 | 2,5 | 120 |
| " | " | 4,0 | 180 |
| 224 | " | 6,0 | 120 |
| " | " | 8,0 | 180 |
| 225 | 2000 | 0,89 | 5 |
| " | " | 4,0 | 10 |
| " | " | 6,0 | 10 |
| 226 | " | 4,0 | 300 |
| 227 | " | 8,0 | 12 |
| " | " | 8,0 | 60 |

Während dieser Tests trat kein Fressen zwischen der Dichtung und der inneren Ringoberfläche auf, es gab keine sprunghaften Temperaturschwankungen, und es traten keine meßbaren Dichtungshöhenverluste auf, mit Ausnahme des Versuches Nr. 227, bei dem ein Höhenverlust entsprechend 0,254 mm pro 100 Stunden auftrat. Zum Vergleich wurde eine reine Clevite-Dichtung gegen LW-1N30 bei einer Ringdrehzahl von 2000 U/min und einer Belastung von 8 kg/cm (in einem Test ähnlich zu obigem Versuch Nr. 227) laufen gelassen. Die Clevite-Dichtung hatte nicht länger als 30 Sekunden Bestand.

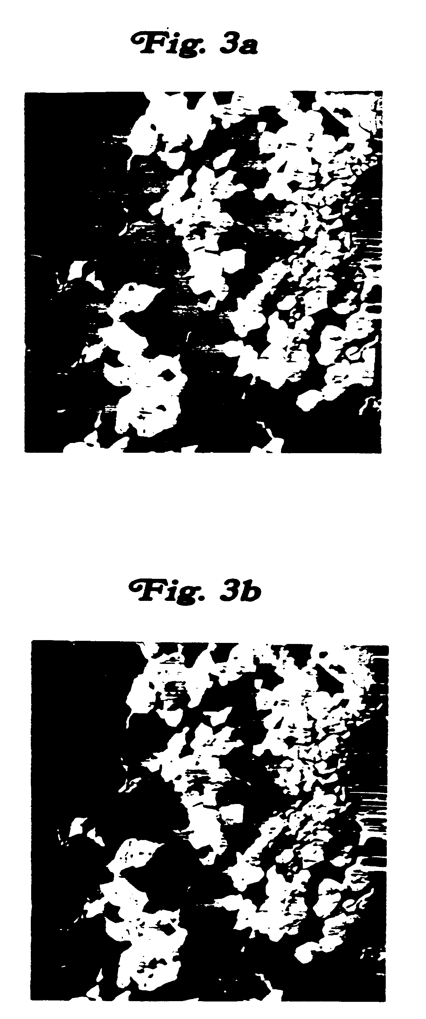

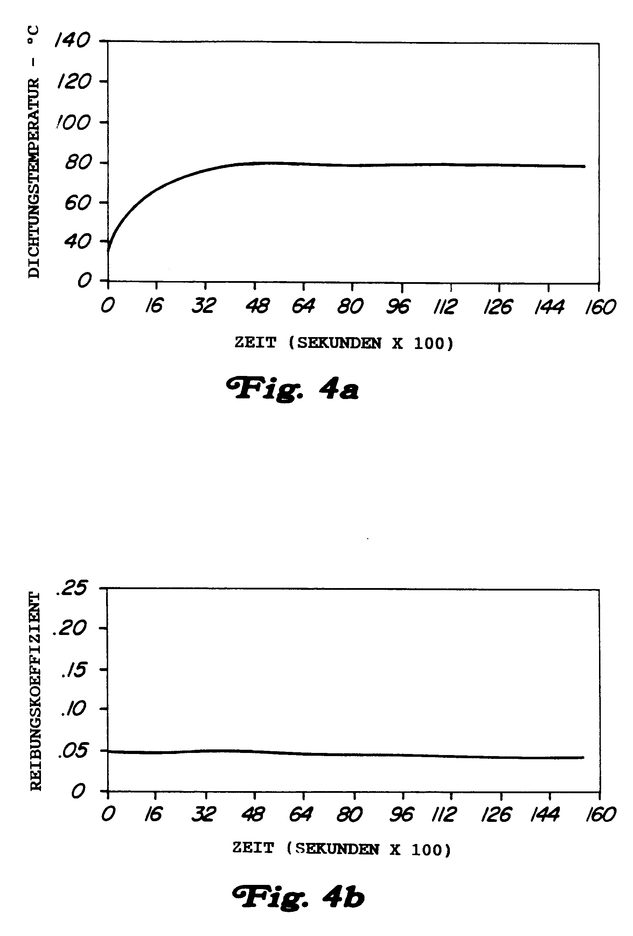

Eine andere Dichtung wurde 4,5 Stunden bei einer Ringdrehzahl von 1000 U/min und einer Belastung von 8 kg/cm gegen LW-15 laufen gelassen, ohne daß Abriebsabnutzungen an der Dichtung festgestellt wurden (siehe Fig. 3a und 3b). Es wird angenommen, daß die Berührungsbelastung vor allem durch die Karbidteilchen getragen wird, die entsprechend ihrer hohen Härte und ihrer Fähigkeit, bei höheren Gleitkontaktoberflächentemperaturen ihre Härte beizubehalten, widerstandsfähig gegen Abrieb sind. Die Neigung des Abriebes wird auch vermindert, da die Karbide in der Dichtungsoberfläche und der Beschichtung nahezu die gleiche Härte aufweisen. Die Clevite-Matrix hilft dabei, die adhesive Neigung an der Dichtung-Beschichtung-Berührungsfläche zu vermindern. In den Fig. 4a und 4b sind die Dichtungstemperatur und der Reibungskoeffizient für diese Tests über der Zeit dargestellt.

Beispielsweise sollte es möglich sein, die oben beschriebene Pulvermischung zu größeren Blöcken (in einer Gesenkform) kalt zu pressen oder (in einer Preßform) kalt isostatisch zu pressen und sie heiß zu pressen oder isostatisch heiß zu pressen, um sie zu sintern und hohlraumfrei zusammengesetzte Körper bei Temperaturen unter 1200 Grad Celsius zu formen und dann die Körper zu tempern, um die geforderte Mikrostruktur unter gesteuerten Bedingungen von Temperatur, Druck, Zeit und Umgebung hervorzubringen. Oder es kann die Pulvermischung unmittelbar bei Temperaturen unter 1200 Grad Celsius in abgedichteten Töpfen isostatisch heiß gepreßt und dann getempert werden, um die geforderte Mikrostruktur unter gesteuerten Bedingungen hervorzubringen.

Bei den oben verwendeten Begriffen "Clevite", "Clevite 300", "Amdry 927", "72F-NS" "LW-15", "LW-1N30" und "SDL-1" handelt es sich um Producktbezeichnungen und Warenzeichen.

## Patentansprüche

1. Verschleißfestes Bauteil bestehend aus einer gesinterten Mischung mit den Gewichtsverhältnissen von etwa:
a) 49 % von Eisenpulver,
b) 26,4 % von Wolframkarbidpulver,
c) 14,1 % von Kobaltpulver und
d) 10,5 % von Molybdän.

2. Bauteil nach Anspruch 1, gekennzeichnet durch eine Struktur aus härteren, im wesentlichen abgerundeten Karbidteilchen, die in einer weicheren Matrix verteilt sind.

3. Verfahren zur Herstellung eines verschleißfesten Bauteils, bei dem eine Mischung aus etwa
a) 49 Gewichts-% Eisenpulver,
b) 26,4 Gewichts-% Wolframkarbidpulver,
c) 14,1 Gewichts-% Kobaltpulver und
d) 10,5 Gewichts-% Molybdän
hergestellt wird, und sich hieran ein Sinterverfahren anschließt.

4. Verfahren nach Anspruch 3, dadurch gekennzeichnet, daß die Mischung durch Kaltpressung in eine gewünschte Form gebracht und anschließend gesintert wird, so daß härtere, abgerundete, in einer weicheren Matrix verteilte Karbidteilchen entstehen.

5. Verfahren nach Anspruch 3 oder 4, dadurch gekennnzeichnet, daß das Bauteil 3 bis 6 Stunden lang bei einer Temperatur zwischen 1150 und 1250 Grad Celsius gesintert wird.

6. Verfahren nach einem der Ansprüch 3 bis 5, dadurch gekennzeichnet, daß das Sinterverfahren ein Vakuumsinterverfahren ist.

7. Verfahren nach einem der Ansprüche 3 bis 6, dadurch gekennzeichnet, daß im Anschluß an das Sinterverfahren das Bauteil heiß isostatisch gepreßt wird.

8. Verfahren nach Anspruch 7, dadurch gekennzeichnet, daß die heiße isostatische Pressung bei einer Temperatur von etwa 1100 Grad Celsius und einem Druck von etwa 10⁸ N/m² (1000 bar) erfolgt.

## Claims

1. A wear-resistant component consisting of a sintered mixture with the proportions by weight of approximately:
a) 49% iron powder
b) 26.4% tungsten carbide powder,
c) 14.1% cobalt powder and
d) 10.5% molybdenum.

2. A component according to claim 1, characterized by a structure of harder, substantially rounded carbide particles distributed in a softer matrix.

3. A method of making a wear-resistant component, in which a mixture of approximately:
a) 49% by weight iron powder
b) 26.4% by weight of tungsten carbide powder,
c) 14.1% by weight of cobalt powder and
d) 10.5% by weight of molybdenum
is produced, followed by a sintering process.

4. A method according to claim 3, characterized in that the mixture is given a desired shape by cold pressing and is then sintered, so that harder, rounded carbide particles are distributed in a softer matrix.

5. A method according to claim 3 or 4, characterized in that the component is sintered for 3 to 6 hours at a temperature between 1150 and 1250 degrees Celsius.

6. A method according to any one of claims 3 to 6, characterized in that the sintering process is a vacuum sintering process.

7. A method according to any one of claims 3 to 6, characterized in that the component is hot isostatically pressed following the sintering process.

8. A method according to claim 7, characterized in that the hot isostatic pressing is effected at a temperature of approximately 1100 degrees Celsius and a pressure of approximately 10⁸ N/m² (1000 bar).

## Revendications

1. Elément de construction résistant à l'usure, constitué d'un mélange fritté avec les proportions approximatives suivantes, en poids :
a) 49 % de poudre de fer,
b) 26,4 % de poudre de carbure de wolfram,
c) 14,1 % de poudre de cobalt et
d) 10,5 % de molybdène.

2. Elément de construction selon la revendication 1, **caractérisé** par une structure de particules de carbure plus dures, sensiblement arrondies, qui sont réparties dans une matrice plus molle.

3. Procédé de fabrication d'un élément de construction résistant à l'usure, selon lequel on réalise un mélange constitué d'environ
a) 49 % en poids de poudre de fer,
b) 26,4 % en poids de poudre de carbure de wolfram,
c) 14,1 % en poids de poudre de cobalt et
d) 10,5 % en poids de molybdène,
à la suite de quoi l'on effectue un frittage.

4. Procédé selon la revendication 3, **caractérisé** en ce que le mélange est amené sous une forme souhaitée par pressage à froid puis est fritté, de sorte qu'on obtient des particules plus dures et arrondies de carbure qui sont réparties dans une matrice plus molle.

5. Procédé selon la revendication 3 ou 4, **caractérisé** en ce que l'élément de construction est fritté pendant 3 à 6 heures à une température comprise entre 1150 et 1250 degrés Celsius.

6. Procédé selon l'une quelconque des revendications 3 à 5, **caractérisé** en ce que le frittage est un frittage sous vide.

7. Procédé selon l'une quelconque des revendications 3 à 6, **caractérisé** en ce qu'à la suite du frittage, l'élément de construction subit une compression isostatique à chaud.

8. Procédé selon la revendication 7, **caractérisé** en ce que la compression isostatique à chaud s'effectue à une température d'environ 1100 degrés Celsius et une pression d'environ 10⁸ N/m² (1000 bars).
